# EUROPEAN PATENT SPECIFICATION

(11) **EP 1 022 292 B1**
(45) Date of publication and mention of the grant of the patent: **04.05.2005**
(21) Application number: 00101107.1
(22) Date of filing: 20.01.2000
(51) Int. Cl.: C08F 210/16, C08F 210/18, C08L 23/12, C08L 23/10

(54) **Ethylene-1-butene random copolymer and polypropylene resin composition comprising the same**
Statistisches Ethylen-1-buten-Copolymer und dieses enthaltende Polypropylenharzzusammensetzung
Copolymère statistique d' éthylène/1-butène et composition de polypropylène contenant celui-ci

(30) Priority: 21.01.1999 JP 1316799
(43) Date of publication of application: 26.07.2000
(73) Proprietor: JSR Corporation, Tokyo 104-0045 (JP)
(72) Inventor: Kodama, Kazuhisa, Tokyo 104-0045 (JP); Takahashi, Shuuichi, Tokyo 104-0045 (JP); Okubo, Akihiko, Tokyo 104-0045 (JP); Morikawa, Akihiko, Tokyo 104-0045 (JP)
(74) Representative: Pellmann, Hans-Bernd, Dipl.-Ing.

(56) References cited:
- EP-A- 0 887 378
- US-A- 5 565 533

## Description

### Detailed Description of the Invention

The present invention relates to a polypropylene resin composition which comprises this a ethylene-1-butene random copolymer and a polypropylene resin and a hydrogenated diene polymer, which has excellent stiffness, heat resistance and impact resistance and which can give injection molded products having a good appearance with low surface gloss and substantially no flow mark.

Molded products of a polypropylene resin are used for various purposes due to their excellent stiffness and heat resistance.

However, the polypropylene resin is normally crystalline and poor in impact resistance, particularly impact resistance at low temperatures. To improve its impact resistance, it is blended with polyethylene or rubber-like material such as polyisobutylene, polybutadiene or ethylene-α-olefin-based copolymer.

In recent years, much attention has been paid to an amorphous or low-crystallinity ethylene-1-butene copolymer as a rubber-like material which undergoes a small reduction in stiffness and which is capable of improving impact resistance. For example, JP-B 58-25693 and JP-B 58-38459 (the term "JP-B" as used herein means an "examined Japanese patent publication") propose a composition comprising a polypropylene resin and an ethylene-1-butene copolymer having a 1-butene content of 15 mol% or less, and JP-A 61-243842 (the term "JP-A" as used herein means an "unexamimed published Japanese patent application") proposes a polypropylene resin composition comprising a polypropylene resin and an ethylene-1-butene copolymer obtained by polymerization using a titanium heterogeneous catalyst.

The ethylene-1-butene copolymer to be contained in the polypropylene resin compositions disclosed by the above publications have excellent flowability and excellent dispersibility in a polypropylene resin to improve impact resistance. As a result, injection molded products of these polypropylene resin compositions have such a problem as a bad appearance with high surface gloss and a distinct flow mark or weld line, thereby losing their high-quality image.

To improve the appearance, an ethylene-1-butene copolymer having a higher molecular weight may be used. However, when the copolymer is used, it is difficult to disperse it with the result of a reduction in impact resistance.

It is an object of the present invention to provide a polypropylene resin composition from which an injection molded product having excellent stiffness and impact resistance, low surface gloss and substantially no fllow mark can be obtained.

Other objects and advantages of the present inventiion will become obvious from the following description.

According to the present invention, firstly, the above objects and advantages of the present invention are attained by using an ethylene-1-butene random copolymer (may be referred to as "first ethylene-1-butene random copolymer" hereinafter) essentially consisting of a structural unit derived from ethylene and a structural unit derived from 1-butene, wherein
(i) the weight ratio (ethylene/1-butene) of the structural unit derived from ethylene to the structural unit derived from 1-butene is in the range of 80/20 to 60/40; and
(ii) the complex shear viscosity η1 measured at a temperature of 230°C and a cone plate angular velocity of 0.1 (rad/sec) is 2,000 (Pa·s) or more and the value (η1/η2) obtained by dividing the complex shear viscosity η1 by a complex shear viscosity η2 measured at the same temperature and a cone plate angular velocity of 100 (rad/sec) is 4 or more.

According to the present invention, secondly, the above objects and advantages are attained by using an ethylene-1-butene random copolymer (may be referred to as "second ethylene-1-butene random copolymer" hereinafter) essentially consisting of a structural unit derived from ethylene, a structural unit derived from 1-butene and a small amount of a structural unit derived from a non-conjugated diene, wherein
(I) the weight ratio (ethylene/1-butene) of the structural unit derived from ethylene to the structural unit derived from 1-butene is in the range of 80/20 to 60/40, and the amount of the structural unit derived from the non-conjugated diene is in the range of 0.01 to 4 mol% based on the total of all the structural units; and
(II) the complex shear viscosity η1 measured at a temperature of 230° C and a cone plate angular velocity of 0.1 (rad/sec) is 4,000 (Pa·s) or more and the value (η1/η2) obtained by dividing the complex shear viscosity η1 by a complex shear viscosity η2 measured at the same temperature and a cone plate angular velocity of 100 (rad/sec) is 4 or more.

According to the present invention, thirdly, the above objects and advantages are attained by using a polypropylene resin composition (may be referred to as "first polypropylene resin composition" hereinafter) comprising:
(A) 95 to 60 parts by weight of a polypropylene resin; and
(B) 5 to 40 parts by weight of a first ethylene-1-butene random copolymer (the total amount of the components (A) and (B) is 100 parts by weight).

According to the present invention, fourthly, the above objects and advantages are attained by using a polypropylene resin composition (may be referred to as "second polypropylene resin composition" hereinafter) comprising:
(A) 95 to 60 parts by weight of a polypropylene resin; and
(B) 5 to 40 parts by weight of a second ethylene-1-butene random copolymer (the total amount of the components (A) and (B) is 100 parts by weight).

According to the present invention, fifthly, the above objects and advantages are attained by a polypropylene resin composition (may be referred to as "third polypropylene resin composition" hereinafter) comprising (A) a polypropylene resin, (B) the first ethylene-1-butene random copolymer and (C) a hydrogenated diene copolymer obtained by hydrogenating at least 80 % of the double bonds of the conjugated diene block of a polymer mainly comprising a conjugated diene compound, wherein the weight ratio of the component (A) to the total of the components (B) and (C) is 95/5 to 60/40 and the weight ratio of the component (B) to the component (C) is 60/40 to 95/5.

According to the present invention, sixthly, the above objects and advantages are attained by a polypropylene resin composition (may be referred to as "fourth polypropylene resin composition" hereinafter) comprising (A) a polypropylene resin, (B) the second ethylene-1-butene random copolymer and (C) a hydrogenated diene polymer obtained by hydrogenating at least 80 % of the double bonds of the conjugated diene block of a polymer mainly comprising a conjugated diene compound, wherein the weight ratio of the component (A) to the total of the components (B) and (C) is 95/5 to 60/40 and the weight ratio of the component (B) to the component (C) is 60/40 to 95/5.

A description is first given of the ethylene-1-butene random copolymer used in the present invention.

### <first ethylene-1-butene random copolymer>

The first ethylene-1-butene random copolymer used in the present invention is substantially a random copolymer of ethylene and 1-butene.

In the first ethylene-1-butene random copolymer used in the present invention, the weight ratio (ethylene/1-butene) of a structural unit derived from ethylene to a structural unit derived from 1-butene is in the range of 80/20 to 60/40, preferably 75/25 to 62/38.

When the first ethylene-1-butene random copolymer has the above composition range and satisfies the following conditions of complex shear viscosity, an injection molded product obtained from the first polypropylene resin composition of the present invention which will be described hereinafter has excellent low-temperature impact resistance and a good surface appearance both of which are be well balanced.

The complex shear viscosity η1 measured at a temperature of 230° C and a cone plate angular velocity of 0.1 (rad/sec) of the first ethylene-1-butene random copolymer is 2,000 (Pa·s) or more, preferably 8,000 (Pa·s) or more, and the value (η1/η2) obtaimed by dividing the complex shear viscosity η1 by a complex shear viscosity η2 measured at the same temperature and a cone plate angular velocity of 100 (rad/sec) of the random copolymer is 4 or more, preferably 6 or more.

The above complex shear viscosity can be measured with a dynamic melt visco-elasticity measuring instrument such as the MR500 Soliquid Meter of Rheology Co., Ltd.

When the above complex shear viscosity η1 is 2,000 (Pa·s) or more, there can be obtained the first polypropylene resin composition which gives an injection molded product having low surface gloss and substantially no flow mark.

When the above complex shear viscosity ratio (η1/η2) is 4 or more, even if the complex shear viscosity η1 is 2,000 (Pa·s) or more, the first polypropylene resin composition of the present invention shows excellent injection moldability.

When the first ethylene-1-butene random copolymer satisfies both the above conditions of complex shear viscosity and the conditions of the above composition, an injection molded product obtained from the first polypropylene resin composition of the present invention has excellent low-temperature impact resistance and low-temperature brittleness and a good surface appearance with low gloss and substantially no flow mark, all of which are well balanced.

The melting point of the first ethylene-1-butene random copolymer of the present invention is preferably 60°C or less. The term "melting point" as used herein denotes a temperature showing a main heat absorption peak measured by DSC.

The weight average molecular weight in terms of polystyrene of the ethylene-1-butene random copolymer of the present invention is preferably 250,000 to 800,000.

### <second ethylene-1-butene random copolymer>

The second ethylene-1-buteme random copolymer used in the present invention comprises a structural unit derived from ethylene, a structural unit derived from 1-butene and further a structural unit derived from a non-conjugated diene in an amount of 0.01 to 4 mol%, preferably 0.01 to 2 mol% based on the total of all the structural units forming the second ethylene-1-butene random copolymer.

In the second ethylene-1-butene random copolymer used in the present invention, the weight ratio (ethylene/1-butene) of the structural unit derived from ethylene to the structural unit derived from 1-butene is in the range of 80/20 to 60/40, preferably 75/25 to 62/38.

In the second ethylene-1-butene random copolymer used in the present invention, the non-conjugated diene to be copolymerized is not particularly limited. Illustrative examples of the non-conjugated diene include 5-ethylidene-2-norbornene, dicyclopentadiene, 1,4-pentadiene, 1,4-hexadiene, 1,5-hexadiene, 1,6-heptadiene, 4-methyl-1,4-hexadiene, 5-methyl-1,4-hexadiene, 1,7-octadiene, 1,8-nonadiene, 7-methyl-1,6-octadiene, 1,9-decadiene, 5-vinyl-2-norbornene, 2,5-norbornadiene and the like. The non-conjugated diene is preferably 5-ethylidene-2-norbornene or dicyclopentadiene.

When the catalyst which is used to produce the ethylene-1-butene random copolymer of the present invention and which will be described hereinafter is a metallocene-based catalyst, an α,ω-diene such as 1,7-octadiene or 1,9-decadiene is particularly preferably used.

These non-conjugated dienes may be used alone or in combination of two or more.

When the second ethylene-1-butene random copolymer has the above composition range and satisfies the following conditions of complex shear viscosity, an injection molded product obtained from the second polypropylene resin composition of the present invention which will be described hereinafter has excellent impact resistance and low-temperature brittleness and a good surface appearance with low gloss and substantially no flow mark, all of which are well balanced.

The complex shear viscosity η1 measured at a temperature of 230° C and a cone plate angular velocity of 0.1 (rad/sec) of the second ethylene-1-butene random copolymer is 4,000 (Pa·s) or more, preferably 8,000 (Pa·s) or more, more preferably 12,000 (Pa·s) or more, and the value (η1/ η2) obtained by dividing the complex shear viscosity η1 by a complex shear viscosity η2 measured at the same temperature and a cone plate angular velocity of 100 (rad/sec) of the random copolymer is 4 or more, preferably 6 or more, more preferably 10 or more.

The above complex shear viscosity can be measured with a dynamic melt visco-elasticity measuring instrument such as the MR500 Soliquid Meter of Rheology Co., Ltd.

When the above complex shear viscosity η1 is 4,000 (Pa·s) or more, there can be obtained the second polypropylene resin composition which gives an injection molded product having low surface gloss and substantially no flow mark.

When the above complex shear viscosity ratio (η1/η2) is 4 or more, even if the complex shear viscosity η1 is 4,000 (Pa·s) or more, the second polypropylene resin composition the present invention shows excellent injection moldability.

When the second ethylene-1-butene random copolymer satisfies both the above conditions of complex shear viscosity and the conditions of the above composition, an injection molded product obtained from the second polypropylene resin composition of the present invention has excellent impact resistance and low-temperature brittleness and a good surface appearance with low gloss and substantially no flow mark, all of which are well balanced.

The melting point of the second ethylene-1-butene random copolymer the present invention is preferably 60° C or less. The term "melting point" as used herein denotes a temperature showing a main heat absorption peak measured by DSC.

The weight average molecular weight in terms of polystyrene of the ethylene-1-butene random copolymer used in the present invention is preferably 250,000 to 800,000.

### <production of ethylene-1-butene random copolymer>

The ethylene-1-butene random copolymer used in the present invention can be produced by a method such as vapor phase polymerization, solution polymerization or slurry polymerization. These polymerization operations can be carried out in a batch manner or continuous manner.

When polymerization is carried out by a solution method or slurry method, an inert hydrocarbon may be used as a polymerization medium.

Illustrative examples of the inert hydrocarbon medium include aliphatic hydrocarbons such as propane, butane, pentane, hexane, heptane, octane and decane; alicyclic hydrocarbons such as cyclopentane and cyclohexane; aromatic hydrocarbons such as benzene, toluene and xylene; hydrocarbon halides such as chlorobenzene used in. Of these inert hydrocarbon media, aliphatic hydrocarbons are preferable.

To produce the ethylene-1-butene random copolymer used in the present invention, a branching agent such as an α,ω-diene must be used at the time of polymerization, or the amount of hydrogen must be reduced to control the molecular weight.

The polymerization catalyst-used to produce the ethylene-1-butene random copolymer used in the present invention is an olefin polymerization catalyst comprising at least one transition metal compound selected from V, Ti, Zr and Hf and an organic metal compound. The olefin polymerization catalyst is preferably a vanadium-based catalyst comprising a vanadium compound and an organic aluminum compound or a metallocene-based catalyst comprising a metal compound containing a cyclopentadienyl group and an ionic compound which reacts with an aluminoxane compound or the above metal compound to form an ionic complex. The polymerization catalyst used to produce the ethylene-1-butene random copolymer of the present invention will be described hereunder. Other polymerization catalyst may also be used.

The vanadium-based catalyst comprises a vanadium compound represented by the formula VX₄ (X is a halogen) or V(OR)ₙX'₃₋ₙ (R is a hydrocarbon group, X' is halogen and n is an integer which satisfies 0 < n ≦ 3) and an organic aluminum compound represented by R'ₘAlX''₃₋ₘ (R' is a hydrocarbon group, X'' is halogen and m is an integer which satisfies 1 ≦ m ≦ 3) and can be obtained by copolymerizing ethylene, 1-butene and a non-conjugated diene in the presence of a catalyst having an Al/V molar ratio of 5 or more at a temperature of 20 to 100° C to ensure that the weight ratio of the ethylene structural unit to the 1-butene structural unit should become 80/20 to 60/40 and that the amount of the non-conjugated diene structural unit should be 0.01 to 4 mol% of the total of all the structural units when it is contained.

In the vanadium compound represented by the above general formulas, R and R' are an aliphatic, alicyclic or aromatic hydrocarbon group, preferably an aliphatic hydrocarbon group, which generally has 1 to 20 carbon atoms, preferably 1 to 3 carbon atoms. n is an integer which satisfies 0 < n ≦ 3, preferably 1 < n ≦ 1.5. m is an integer which satisfies 1 ≦ m ≦ 3, preferably 1.5 ≦ m ≦ 2.

Illustrative examples of the vanadium compound represented by the above general formulas include VCl₄, VO(OCH₃)Cl₂, VO(OCH₃)₂Cl, VO(OCH₃)₃, VO(OC₂H₅)Cl₂, VO(OC₂H₅)_{1.5}Cl_{1.5}, VO(O C₂H₅)₂Cl, VO(O C₂H₅)₃, VO(O C₂H₅)_{1.5}Br_{1.5}, VO(OC₃H₇)Cl₂, VO(OC₃H₇)_{1.5}Cl_{1.5}, VO(OC₃H₇)₂Cl, VO(OC₃H₇)₃, VO(On-C₄H₉)Cl₂, VO(On-C₄H₉)₂Cl, VO(Oiso-C₄H₉)₂Cl, VO(Osec-C₄H₉)₂Cl, VO(OC₅H₁₁)_{1.5}Cl_{1.5} and mixtures thereof. They may be used alone or in combination of two or more.

Illustrative examples of the organic aluminum compound include (C₂H₅)₃Al, (C₂H₅)₂AlCl, (C₂H₅)_{1.5}AlCl_{1.5}, (C₂H₅)AlCl₂ and the like. They may be used alone or in combination of two or more.

The organic aluminum compound and the vanadium compound are used in an Al/V molar ratio of preferably 5 or more, more preferably 5 to 30, particularly preferably 7 to 20.

Copolymerization is desirably carried out in such a manner that ensures that the concentration of the vanadium compound in the reaction medium is preferably 0.01 to 5 mmol/l, more preferably 0.1 to 2 mmol/l. The concentration of the organic aluminum compound is adjusted in such a manner that ensures that the Al/V molar ratio is preferably 5 or more, more preferably 5 to 30, particularly preferably 7 to 20 as described above. The polymerization temperature is preferably 5 to 90° C, more preferably 10 to 70° C. The polymerization pressure (gauge pressure) is preferably 0 to 50 kg/cm², more preferably 0 to 20 kg/cm².

The above metallocene-based catalyst is a catalyst comprising the following components (a) and (b) or a catalyst comprising the following components (c) and (d).

The component (a) is a transition metal compound represented by the following formula [I]:

R''ₛ(C₅Rₘ)ₚ(R'ₙE)_{q}MQ_{4-p-q} [I]

wherein M is the metal of the group IV of the periodic table, (C₅Rₘ) is a cyclopentadienyl group or substituted cyclopentadienyl group, R groups may be the same or different and are each a hydrogen atom, alkyl group having 1 to 20 carbon atoms, aryl group having 6 to 40 carbon atoms, alkaryl group having 7 to 40 carbon atoms or aralkyl group having 7 to 40 carbon atoms, or two adjacent carbon atoms thereof are bonded together to form a 4- to 8-membered carbon ring, E is an atom having a pair of non-bonding electrons, R' is an alkyl group having 1 to 20 carbon atoms, aryl group having 6 to 40 carbon atoms, alkaryl group having 7 to 40 carbon atoms or aralkyl group having 7 to 40 carbon atoms, R'' is an alkylene group having 1 to 20 carbon atoms, dialkyl silicon or dialkyl germanium for combining two ligands, s is 1 or 0, m is 4 and n is an integer which is smaller than the valence of E by 2 when s is 1, m is 5 and n is an integer which is smaller than the valence of E by 1 when s is 0, R' groups may be the same or different when n≧2 and may be bonded together to form a ring, Q is a hydrogen atom, halogen atom, alkyl group having 1 to 20 carbon atoms, aryl group having 6 to 40 carbon atoms, alkaryl group having 7 to 40 carbon atoms or aralkyl group having 7 to 40 carbon atoms, and p and q are an integer of 0 to 4 and satisfy 0 < p + q ≦ 4.

Illustrative examples of the component (a) include bis(cyclopentadienyl)zirconium dichloride, bis(cyclopentadienyl)zirconium dibromide, bis(cyclopentadienyl)zirconium dimethyl, bis(cyclopentadienyl)zirconium diphenyl; dimethylsilylbis(cyclopentadienyl)zirconium dichloride, dimethylsilylbis(cyclopentadienyl)zirconium dimethyl, methylenebis(cyclopentadienyl)zirconium dichloride, ethylenebis(cyclopentadienyl)zirconium dichloride, bis(indenyl)zirconium dichloride, bis(indenyl)zirconium dimethyl, dimethylsilylbis(indenyl)zirconium dichloride, methylenebis(indenyl)zirconium dichloride, bis(4,5,6,7-tetrahydroindenyl)zirconium dichloride, bis(4,5,6,7-tetrahydroindenyl)zirconium dimethyl, dimethylsilylbis(4,5,6,7-tetrahydro-1-indenyl)zirconium dichloride, dimethylsilylbis(4,5,6,7-tetrahydro-1-indenyl)zirconium dimethyl, ethylenebis(4,5,6,7-tetrahydro-1-indenyl)zirconium dichloride, bis(methylcyclopentadienyl)zirconium dichloride, bis(methylcyclopentadienyl)zirconium dimethyl, dimethylsilylbis(3-methyl-1-cyclopentadienyl)zirconium dichloride, methylenebis(3-methyl-1-cyclopentadienyl)zirconium dichloride, bis(tert-butylcyclopentadienyl)zirconium dichloride, dimethylsilylbis(3-tert-butyl-1-cyclopentadienyl) zirconium dichloride, bis(1,3-dimethylcyclopentadienyl)zirconium dichloride, dimethylsilylbis(2,4-dimethyl-1-cyclopentadienyl) zirconium dichloride, bis(1,2,4-trimethylcyclopentadienyl)zirconium dichloride, dimethylsilylbis(2,3,5-trimethyl-1-cyclopentadienyl) zirconium dichloride, bis(fluorenyl)zirconium dichloride, dimethylsilylbis(fluorenyl)zirconium dichloride, (fluorenyl)(cyclopentadienyl)zirconium dichloride, dimethylsilyl(fluorenyl)(cyclopentadienyl)zirconium dichloride, (tert-butylamide)(1,2,3,4,5-pentamethylcyclopentadienyl)zirconium dichloride, dimethylsilyl(tert-butylamide)(2,3,4,5-tetramethyl-1-cyclopentadienyl)zirconium dichloride, methylene(tert-butylamide)(2,3,4,5-tetramethyl-1-cyclopentadienyl)zirconium dichloride, (phenoxy)(1,2,3,4,5-pentamethylcyclopentadienyl) zirconium dichloride, dimethylsilyl(o-phenoxy)(2,3,4,5-tetramethyl-1-cyclopentadienyl)zirconium dichloride, methylene(o-phenoxy)(2,3,4,5-tetramethyl-1-cyclopentadienyl)zirconium dichloride, ethylene(o-phenoxy)(2,3,4,5-tetramethyl-1-cyclopentadienyl)zirconium dichloride, bis(dimethylamide)zirconium dichloride, bis(diethylamide)zirconium dichloride, bis(di-tert-butylamide)zirconium dichloride, dimethylsilylbis(methylamide)zirconium dichloride, dimethylsilylbis(tert-butylamide)zirconium dichloride, and compounds obtained by substituting zirconium thereof with titanium or hafnium. These transition metal compounds may be used alone or in combination of two or more.

The compound (b) is a linear aluminoxane compound represented by the following formula [II] and/or a cyclic aluminoxane compound represented by the following formula [III]:

R₂Al-O-[Al(R)-O]ₙ-AlR₂ [II]

[Al(R)-O]ₙ₊₂ [III]

wherein R's may be the same or different and are each an alkyl group having 1 to 20 carbon atoms, aryl group having 6 to 40 carbon atoms, alkaryl group having 7 to 40 carbon atoms or aralkyl group having 7 to 40 carbon atoms, preferably a methyl group or ethyl group, particularly preferably a methyl group, and n is an integer of 2 to 50, preferably 4 to 30.

These aluminoxane compounds may be used alone or in combination of two or more.

As for the ratio of the component (a) to the component (b), the transition metal/aluminum atom molar ratio is preferably in the range of 1:1 to 1:100,000, more preferably 1:5 to 1:50,000.

The component (c) is a transition metal alkyl compound represented by the following formula [IV]:

R''ₛ(C₅Rₘ)ₚ(R'ₙE)_{q}MR'''_{4-p-q} [IV]

wherein M is the metal of the group IV of the periodic table, (C₅Rₘ) is a cyclopentadienyl group or substituted cyclopentadienyl group, R groups may be the same or different and each a hydrogen atom, alkyl group having 1 to 20 carbon atoms, aryl group having 6 to 40 carbon atoms, alkaryl group having 7 to 40 carbon atoms or aralkyl group having 7 to 40 carbon atoms, or two adjacent carbon atoms thereof are bonded together to form a 4- to 8-membered carbon ring, E is an atom having a pair of non-bonding electrons, R' is an alkyl group having 1 to 20 carbon atoms, aryl group having 6 to 40 carbon atoms, alkaryl group having 7 to 40 carbon atoms or aralkyl group having 7 to 40 carbon atoms, R'' is an alkylene group having 1 to 20 carbon atoms, dialkyl silicon or dialkyl germanium for combining two ligands, s is 1 or 0, m is 4 and n is an integer which is smaller than the valence of E by 2 when s is 1, m is 5 and n is an integer which is smaller than the valence of E by 1 when s is 0, R' groups may be the same or different when n≧2 and may be bonded together to form a ring, R''' is an alkyl group having 1 to 20 carbon atoms, aryl group having 6 to 40 carbon atoms, alkaryl group having 7 to 40 carbon atoms or aralkyl group having 7 to 40 carbon atoms, and p and q are an integer of 0 to 3 and satisfy 0 < p + q ≦ 4.

Illustrative examples of the component (c) include bis(cyclopentadienyl)zirconium dimethyl, bis(cyclopentadienyl)zirconium diethyl, bis(cyclopentadienyl)zirconium diisobutyl, bis(cyclopentadienyl)zirconium diphenyl, bis(cyclopentadienyl)zirconium di{bis(trimethylsilyl)methyl} dimethylsilylbis(cyclopentadienyl)zirconium dimethyl, dimethylsilylbis(cyclopentadienyl)zirconium diisobutyl, methylenebis(cyclopentadienyl)zirconium dimethyl, ethylenebis(cyclopentadienyl)zirconium dimethyl, bis(indenyl)zirconium dimethyl, bis(indenyl)zirconium diisobutyl, dimethylsilylbis(indenyl)zirconium dimethyl, methylenebis(indenyl)zirconium dimethyl, ethylenebis(indenyl)zirconium dimethyl, bis(4,5,6,7-tetrahydroindenyl)zirconium dimethyl, dimethylsilylbis(4,5,6,7-tetrahydro-1-indenyl)zirconium dimethyl, ethylenebis(4,5,6,7-tetrahydro-1-indenyl)zirconium dimethyl, bis(methylcyclopentadienyl)zirconium dimethyl, dimethylsilylbis(3-methyl-1-cyclopentadienyl)zirconium dimethyl, bis(tert-butylcyclopentadienyl)zirconium dimethyl, dimethylsilylbis(3-tert-butyl-1-cyclopentadienyl) zirconium dimethyl, bis(1,3-dimethylcyclopentadienyl)zirconium dimethyl, bis(1,3-dimethylcyclopentadienyl)zirconium diisobutyl, dimethylsilylbis(2,4-dimethyl-1-cyclopentadienyl) zirconium dimethyl, methylenebis(2,4-dimethyl-1-cyclopentadienyl)zirconium dimethyl, ethylenebis(2,4-dimethyl-1-cyclopentadienyl)zirconium dimethyl, bis(1,2,4-trimethylcyclopentadienyl)zirconium dimethyl, dimethylsilylbis(2,3,5-trimethyl-1-cyclopentadienyl) zirconium dimethyl, bis(fluorenyl)zirconium dimethyl, dimethylsilylbis(fluorenyl)zirconium dimethyl, (fluorenyl)(cyclopentadienyl)zirconium dimethyl, dimethylsilyl(fluorenyl)(cyclopentadienyl)zirconium dimethyl, (tert-butylamide)(1,2,3,4,5-pentamethylcyclopentadienyl)zirconium dimethyl, dimethylsilyl(tert-butylamide)(2,3,4,5-tetramethyl-1-cyclopentadienyl)zirconium dimethyl, methylene(tert-butylamide)(2,3,4,5-tetramethyl-1-cyclopentadienyl)zirconium dimethyl, (phenoxy)(1,2,3,4,5-pentamethylcyclopentadienyl) zirconium dimethyl, dimethylsilyl(o-phenoxy)(2,3,4,5-tetramethyl-1-cyclopentadienyl)zirconium dimethyl, methylene(o-phenoxy)(2,3,4,5-tetramethyl-1-cyclopentadienyl)zirconium dimethyl, bis(dimethylamide)zirconium dimethyl, bis(diethylamide)zirconium dimethyl, bis(di-tert-butylamide)zirconium dimethyl, dimethylsilylbis(methylamide)zirconium dimethyl, dimethylsilylbis(tert-butylamide)zirconium dimethyl and compounds obtained by substituting zirconium thereof with titanium or hafnium. The component (c) is not limited to these. These transition metal alkyl compounds may be used alone or in combination of two or more.

The above transition metal alkyl compound may be used after synthesized or formed by bringing a transition metal halide in which R'' in the above formula [IV] is substituted with a halogen atom into contact with an organic metal compound such as trimethylaluminum, triethylaluminum, diethylaluminum monochloride, triisobutylaluminum, methyllithium or butyllithium in a reaction system.

The component (d) is an ionic compound represented by the following formula [V]:

([L]k⁺)ₚ)[M'A1 A2...An]⁻)_{q} [V]

wherein [L]k⁺ is a Brφnsted acid or Lewis acid, M' is the element of the groups XIII to XV of the periodic table, A1 to An are each a hydrogen atom, halogen atom, alkyl group having 1 to 20 carbon atoms, dialkylamino group having 1 to 30 carbon atoms, alkoxyl group having 1 to 20 carbon atoms, aryl group having 6 to 40 carbon atoms, aryloxy group having 6 to 40 carbon atoms, alkaryl group having 7 to 40 carbon atoms, aralkyl group having 7 to 40 carbon atoms, halogen-substituted hydrocarbon group having 1 to 40 carbon atoms, acyloxy group having 1 to 20 carbon atoms or organic metalloid group, k is an integer of 1 to 3 indicating the ionic valence of L, p-is an integer of 1 or more, and q = (k x p).

Illustrative examples of the component (d) include trimethylammonium triphenylborate, triethylammonium tetraphenylborate, tri-n-butylammonium tetraphenylborate, methyl(di-n-butyl)ammonium tetraphenylborate, dimethylanilinium tetraphenylborate, methylpyridinium tetraphenylborate, methyl(2-cyanopyridinium) tetraphenylborate, methyl(4-cyanopyridinium) tetraphenylborate, trimethylammonium tetrakis(pentafluorophenyl)borate, triethylammonium tetrakis(pentafluorophenyl)borate, tri-n-butylammonium tetrakis(pentafluorophenyl)borate, methyl(di-n-butyl)ammonium tetrakis(pentafluorophenyl)borate, dimethylanilinium tetrakis(pentafluorophenyl)borate, methylpyridinium tetrakis(pentafluorophenyl)borate, methyl(2-cyanopyridinium) tetrakis(pentafluorophenyl)borate, methyl(4-cyanopyridinium) tetrakis(pentafluorophenyl)borate, dimethylanilinium tetrakis[bis(3,5-di-trifluoromethyl)phenyl]borate, ferrocenium tetraphenylborate, silver tetraphenylborate, ferrocenium tetrakis(pentafluorophenyl)borate and the like. These ionic compounds may be used alone or in combination of two or more.

The molar ratio ((c):(d)) of the component (c) to the component (d) is preferably in the range of 1:0.5 to 1:20, more preferably 1:0.8 to 1:10.

To produce the ethylene-1-butene random copolymer used in the present invention, at least one catalytic component carried on an appropriate carrier may be used. The carrier is not limited to a particular kind and may be an inorganic oxide carrier, other inorganic carrier or organic carrier. The method of carrying the catalytic component on the carrier is not particularly limited and any known methods may be used.

The ethylene-based random copolymer obtained by using the above metallocene-based catalyst has excellent randomness, a narrow composition distribution parameter(s) and low crystallinity.

When polymerization is carried out using the above metallocene-based catalyst, the molecular weight of the obtained random copolymer can be controlled by introducing hydrogen at an appropriate pressure.

Polymerization for producing the ethylene-1-butene random copolymer of the present invention is preferably carried out at a temperature of about 20 to 200° C, more preferably 30 to 100° C. The pressure (gauge pressure) at the time of polymerization is preferably more than 0 kg/cm² and 100 kg/cm² or less, more preferably more than 0 kg/cm² and 50 kg/cm² or less.

### <hydrogenated diene copolymer>

The component (C) is a hydrogenated diene polymer obtained by hydrogenating at least 80 % of the double bonds of the conjugated diene block of a polymer mainly comprising a conjugated diene compound.

That is, the hydrogenated diene polymer (C) is a hydrogenated product of a diene polymer. This diene polymer will be referred to as "polymer before hydrogenation" hereinafter.

The above polymer before hydrogenation is chosen from (1) homopolymers of a conjugated diene; (2) random copolymers of a conjugated diene and an aromatic vinyl compound; (3) block copolymers comprising the polymer block of an aromatic vinyl compound and the polymer block of a conjugated diene compound; (4) block copolymers comprising the polymer block of an aromatic vinyl compound and the random copolymer block of a conjugated diene/aromatic vinyl compound; (5) block copolymers comprising the polymer block of a conjugated diene compound and the copolymer block of a conjugated diene/aromatic vinyl compound; (6) block copolymers comprising the polymer block of a conjugated diene compound and a tapered block composed of an aromatic vinyl compound and a conjugated diene with a gradual increase in the amount of the aromatic vinyl compound; (7) block copolymers comprising the random copolymer block of a conjugated diene/aromatic vinyl compound and a tapered block composed of an aromatic vinyl compound and a conjugated diene with a gradual increase in the amount of the aromatic vinyl compound; and (8) block copolymers comprising a polybutadiene block containing 30 % or less of 1,2-vinyl bonds and the polymer block of a conjugated diene compound containing more than 30 % of 1,2- and 3,4-vinyl bonds.

Of these polymers before hydrogenation, preferable are diene polymers such as block copolymers comprising the polymer block of an aromatic vinyl compound and the polymer block of a conjugated diene compound; block copolymers comprising the polymer block of an aromatic vinyl compound and the random copolymer block of a conjugated diene/aromatic vinyl compound; and block copolymers comprising a polybutadiene block containing 30 % or less of 1,2-vinyl bonds and the polymer block of a conjugated diene compound containing more than 30 % of 1,2- and 3,4-vinyl bonds. A polypropylene resin composition which gives an injection molded product having high impact strength can be obtained by using these polymers before hydrogenation as a material having an excellent function to compatibilize the polypropylene resin (A) with the ethylene-α-olefin random copolymer (B).

The weight ratio of the conjugated diene compound to the aromatic vinyl compound forming the polymer before hydrogenation is not particularly limited but preferably 100/0 to 60/40, more preferably 100/0 to 70/30.

The copolymer of a conjugated diene compound and an aromatic vinyl compound can be advantageously used as the polymer before hydrogenation because the stiffness of the aromatic vinyl compound and the elasticity of the conjugated diene can be balanced by a polymerization method used in the production of the copolymer.

Illustrative examples of the conjugated diene compound used in the polymer before hydrogenation include 1,3-butadiene, isoprene, 2,3-dimethyl-1,3-butadiene, 1,3-pentadiene, 2-methyl-1,3-pentadiene, 1,3-hexadiene, 4,5-diethyl-1,3-octadiene, 3-butyl-1,3-octadiene, chloroprene and the like. Of these, 1,3-butadiene, isoprene and 1,3-pentadiene are preferable and 1,3-butadiene and isoprene are particularly preferable because a hydrogenated diene polymer (C) which can be used for industrial purposes and which has excellent physical properties can be obtained from these.

Illustrative examples of the aromatic vinyl compound include styrene, α-methylstyrene, p-methylstyrene, t-butylstyrene, divinylbenzene, N,N-dimethyl-p-aminoethylstyrene, N,N-diethyl-p-aminoethylstyrene, vinylpyridine and the like. Of these, styrene and α-methylstyrene are preferable, and styrene is the most preferable.

The above polymer before hydrogenation may be a polymer whose chain is extended or branched by the residual groups of a coupling agent used.

Illustrative examples of the coupling agent include diethyl adipate, divinylbenzene, methyl dichlorosilane, silicon tetrachloride, butyl trichlorosilicon, tetrachlorotin, butyl trichlorotin, dimethyl chlorosilicon, tetrachlorogermanium, 1,2-dibromoethane, 1,4-chloromethylbenzene, bis(trichlorosilyl)ethane, epoxylated linseed oil, tolylene diisocyanate, 1,2,4-benzenetriisocyanate and the like.

A mixture of two or more of the polymers before hydrogenation may be suitably used as the hydrogenated diene polymer (C) of the present invention after hydrogeneted. Further, a mixture of two or more of the hydrogenated diene polymers may also be suitably used as the hydrogenated diene polymer of the present invention.

The hydrogenated diene polymer (C) used in the present invention may be modified by a functional group. For example, it may be modified by a compound containing at least one functional group selected from an acid anhydride group, carboxyl group, hydroxyl group, amino group, isocyanate group and epoxy group.

The hydrogenated diene polymer (C) used in the present invention is obtained by hydrogenating the polymer before hydrogenation, that is, a polymer mainly comprising a conjugated diene compound, as described above. Since the polymer functions as a compatibilizer between the polypropylene resin (A) and the first or second-ethylene-1-butene random copolymer (B), 80 % or more, preferably 90 % or more of the double bonds of a conjugated diene component are saturated. When the degree of hydrogenation is lower than 80 %, compatibility between the polypropylene resin (A) and the first or second ethylene-1-butene random copolymer (B) deteriorates and the function of the polymer as a compatibilizer between the polypropylene resin (A) and the first or second ethylene-1-butene random copolymer (B) lowers disadvantageously.

The number average molecular weight of the hydrogenated diene polymer (C) is preferably 10,000 to 700,000, more preferably 50,000 to 600,000, much more preferably 100,000 to 400,000 from the viewpoint of balance between the moldability and physical properties of the obtained polypropylene resin composition. When the molecular weight is lower than 10,000, the impact strength of the obtained injection molded product may lower. When the molecular weight is higher than 700,000, moldability may degrade.

The total content of vinyl bonds in the conjugated diene component of the tapered blocks composed of the conjugated diene and the aromatic vinyl compound with a gradual increase in the amount of the aromatic vinyl compound in the block copolymers (6) and (7) and the polybutadiene block containing 30 % or less of 1,2-vinyl bonds in the block copolymer (8), that is, the total content of 1,2- and 3,4-vinyl bonds in the hydrogenated diene polymer (C) is preferably 50 to 80 %, more preferably 55 to 75 %, the most preferably 60 to 75 %.

When the content of vinyl bonds in the conjugated diene component of the tapered blocks composed of the conjugated diene and the aromatic vinyl compound with a gradual increase in the amount of the Aromaic vinyl compound in the block copolymers (6) and (7) and the polybutadiene block containing 30 % or less of 1,2-vinyl bonds in the block copolymer (8) of the hydrogenated diene polymer (C) is lower than 50 %, the function of the polymer (C) as a compatibilizer between the polypropylene resin (A) and the ethylene- α-olefin random copolymer (B) lowers, whereby the impact strength of the obtained injection molded product deteriorates disadvantageously. When the content is larger than 80 %, stiffness degrades disadvantageously.

The hydrogenated diene polymer (C) can be obtained, for example, by the method disclosed by JP-A 3-72512 at page 4, line 13 in the upper right column to page 6, line 1 in the lower left column.

A detailed description is subsequently given of the polypropylene resin composition of the present invention.

### <polypropylene resin>

The polypropylene resin (A) used in the present invention is a propylene homopolymer or a propylene- α-olefin copolymer containing 10 mol% or less of a structural unit derived from an α-olefin other than propylene, preferably an α-olefin having 2 carbon atoms or 4 to 20 carbon atoms.

Illustrative examples of the α-olefin include ethylene, 1-butene, 1-pentene, 1-hexene, 1-heptene, 1-octene, 1-decene, 1-dodecene, 1-hexadodecene, 4-methyl-1-pentene, 2-methyl-1-butene, 3-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-heptene, dimethyl-1-octene, ethyl-1-octene, mathyl-1-nonene, vinylcyclopentane, vinylcyclohexane, vinylnorbornane and the like.

These α-olefins may be used alone or in combination of two or more.

The copolymer of propylene and any one of these α-olefins may be a random copolymer or block copolymer.

The polypropylene resin (A) used in the present invention is preferably a propylene-ethylene block copolymer, particularly preferably a propylene-ethylene block copolymer containing 25 wt% or less of ethylene.

The melt flow rate (MFR) of the polypropylene resin (A) measured at 230° C under a load of 2.16 kg in accordance with ASTM-D1238 is preferably 0.1 to 200 g/10 min, more preferably 1 to 150 g/10 min, the most preferably 10 to 120 g/10 min.

When MFR is in the above range, the polypropylene resin composition of the present invention has excellent flowability and can be easily molded into a large product. When MFR exceeds the above range, the polypropylene resin composition has poor impact strength.

The polypropylene resin (A) used in the present invention has crystallinity and shows a distnct melting point. The melting point measured by DSC is preferably 140° C or more, particularly preferably 155° C or more from the viewpoint of heat resistance.

The first or second ethylene-1-butene random copolymer (B) used in the present invention has already been described in detail. It should be emphasized again that an injection molded product obtained from the polypropylene resin composition of the present invention when the conditions of composition and the conditions of complex shear viscosity are both satisfied has excellent low-temperature impact resistance and a good surface appearance which are well balanced.

### <polypropylene resin composition>

In the polypropylene resin composition of the present invention, the (A)/((B) + (C)) weight ratio is 95/5 to 60/40. The weight ratio of the component (B) to the component (C) is preferably 60/40 to 100/0, preferably 60/40 to 95/5, more preferably 70/30 to 90/10.

The total amount of the polypropylene resin (A), the ethylene- α-olefin random copolymer (B) and the hydrogenated diene polymer (C) is 100 parts by weight.

An injection molded product having excellent impact resistance and a good appearance with low surface gloss and without flow mark and weld mark is obtained from the polypropylene resin composition of the present invention which comprises the components (A) and (B) and optionally the component (C).

The polypropylene resin composition of the present invention may contain a polymer other than the components (A), (B) and (C) in limits not prejudicial to the object of the present invention for the purpose of reducing costs, improving printability and balancing physical properties well. Illustrative examples of the polymer to be contained in the resin composition include polyolefins such as polyethylene, polybutene, polyhexene and polymethylpentene, olefin-based copolymers other than the components (A) and (B), styrene-butadiene block copolymer (SBS), styreneisoprene block copolymer and the like. A modified polymer obtained by grafting a polyolefin-based resin or polymer such as ethylene-propylene rubber or ethylene-butene rubber with maleic anhydride may be added. These modified polymers may be effective in improving coating properties.

The amount of the polymer other than the components (A), (B) and (C) is preferably 20 parts or less by weight based on 100 parts by weight of the total of the components (A), (B) and (C).

The polypropylene resin composition of the present invention may contain an inorganic filler as required. The amount of the inorganic filler is 40 parts or less by weight, preferably 5 to 30 parts by weight, based on 100 parts by weight of the total of the components (A) and (B).

Illustrative examples of the inorganic filler used include powdery fillers typified by natural silicic acid and silicates such as talc, kaolinite, baked clay, pyrophillite, sericite and wollastonite, carbonates such as precipitating calcium carbonate, ground calcium carbonate and magnesium carbonate, hydroxides such as aluminum hydroxide and magnesium hydroxide, oxides such as zinc oxide, zinc white and magnesium oxide, and synthetic silicic acid and silicates such as hydrous calcium silicate, hydrous aluminum silicate, hydrous silicic acid and silicic anhydride; flaky fillers such as mica, fibrous fillers such as basic magnesium sulfate whisker, calcium titanate whisker, aluminum borate whisker, sepiolite, PMF (Processed Mineral Fiber), xonotlite, potassium titanate and ellestadite, balloon-like fillers such as glass balloon and fly ash balloon, and the like. They may be used alone or in combination of two or more.

Of these inorganic fillers, talc is preferable and fine powder talc having an average particle diameter of 0.01 to 10 µm is particularly preferable to improve the surface hardness and heat deformation temperature of a molded product and the dispersibility of the component (B). When talc is used, it is preferably used in an amount of 40 parts or less by weight, more preferably 5 to 30 parts by weight, based on 100 parts by weight of the total of the components (A), (B) and (C).

The polypropylene resin composition of the present invention may contain such additives as a heat resistance stabilizer, nucleating agent, ultraviolet absorber, lubricant, antistatic agent, flame retardant, pigment, dye, phenol-based, sulfur-based or phosphor-based antioxidant, dispersant, copper inhibitor, neutralizer, foaming agent, plasticizer, foam inhibitor, crosslinking agent, flowability improving agent such as a peroxide, light resistance stabilizer such as HALS, weld strength improving agent and the like in limits not prejudicial to the object of the present invention.

The total amount of additives is preferably 2 parts or less by weight based on 100 parts by weight of the total of the components (A), (B) and (C).

The polypropylene resin composition of the present invention is obtained by charging the above components into a Henschel mixer, V-shaped blender, tumbler blender, ribbon blender or the like to be mixed and melt kneading the resulting mixture with a single-screw extruder, multi-screw extruder, kneader, Banbury mixer or the like.

The following examples are provided for the purpose of further illustrating the present invention but are in no way to be taken as limiting.

"Parts" and "%" are based on weight unless otherwise stated.

### Examples

### Example 1 (synthesis of ethylene-1-butene random copolymer)

1,000 Ml of purified n-hexane was charged into a 2-liter glass autoclave whose inside was fully substituted with nitrogen, the temperature was adjusted to 15° C at normal pressure, and ethylene, 1-butene, and hydrogen as a molecular weight control agent, were fed into the autoclave continuously at a rate of 5 l/min, 1.5 l/min and 0.3 l/min, respectively. Thereafter, vanadium tetrachloride was added in such an amount that ensures that the concentration of the catalyst in the polymer solvent became 0.25 mmol/l, and ethyl aluminum sesquichloride was added in such an amount that ensures that the Al/V molar ratio became 18 to start polymerization. The temperature was maintained at 15°C during polymerization to carry out a reaction for 10 minutes. After the end of the reaction, the polymer solution was charged into a large amount of methanol to precipitate a polymer, which was then extracted by filtration and dried under reduced pressure to obtain 30 g of the polymer.

This polymer was an ethylene-1-butene random copolymer having an ethylene structural unit/1-butene structural unit weight ratio of 68/32, a η1 of 14,000 (Pa·s) and a η1/η2 of 7.3. This copolymer is designated as EBM1.

### Example 2 (synthesis of first ethylene-1-butene random copolymer)

31 Grams of a polymer was obtained in the same manner as in Example 1 except that the hydrogen feed rate was changed to 0.1 l/min.

This polymer was an ethylene-1-butene random copolymer having an ethylene structural unit/1-butene structural unit weight ratio of 65/35, an η1 of 20,000 (Pa·s) and an η1/η2 of 8.0. This copolymer is designated as EBM2.

### Example 3 (synthesis of second ethylene-1-butene random copolymer)

29 Grams of a polymer was obtained in the same manner as in Example 1 except that 1,000 ml of purified n-hexane and 4 ml of ethylidene norbornene were added to a 2-liter glass autoclave whose inside was fully substituted with nitrogen.

This polymer was an ethylene-1-butene random copolymer having an ethylene structural unit/1-butene structural unit weight ratio of 64/32, an ethylene norbornene content of 4.0 wt%, an η1 of 50,000 (Pa·s), and an η1/η2 of 25. This copolymer is designated as EBD1.

### Example 4 (synthesis of second ethylene-1-butene random copolymer)

29 Grams of a polymer was obtained in the same manner as in Example 3 except that the amount of ethylidene norbornene was changed to 2 ml.

This polymer was an ethylene-1-butene random copolymer having an ethylene structural unit/1-butene structural unit weight ratio of 66/32, an ethylene norbornene content of 2.0 wt%, an η1 of 70,000 (Pa·s), and an η1/η2 of 35. This copolymer is designated as EBD2.

### Example 5 (synthesis of second ethylene-1-butene random copolymer)

29 Grams of a polymer was obtained in the same manner as in Example 3 except that the hydrogen feed rate was changed to 0.7 l/min.

This polymer was an ethylene-1-butene random copolymer having an ethylene structural unit/1-butene structural unit weight ratio of 64/32, an ethylene norbornene content of 4.0 wt%, an η1 of 10,000 (Pa·s), and an η1/η2 of 6.7. This copolymer is designated as EBD3.

### Comparative Example 1

35 Grams of a polymer was obtained in the same manner as in Example 1 except that the hydrogen feed rate was changed to 1.2 l/min.

This polymer was an ethylene-1-butene random copolymer having an ethylene structural unit/1-butene structural unit weight ratio of 68/32, an η1 of 1,300 (Pa·s), and an η1/η2 of 1.2. This copolymer is designated EBM3.

### Comparative Example 2

30 Grams of a polymer was obtained in the same manner as in Example 1 except that the hydrogen feed rate was changed to 0.7 l/min.

This polymer was an ethylene-1-butene random copolymer having an ethylene structural unit/1-butene structural unit weight ratio of 68/32, an η1 of 3,200 (Pa·s), and an η1/η2 of 2.6. This copolymer is designated EBM4.

The physical property values of the copolymers EBM1 to EBM4 and EBD1 to EBD3 synthesized in Examples 1 to 5 and Comparative Examples 1 and 2 are shown in Table 1 below.

**Table 1**

| | E/B (weight ratio) | η1/η2 | η1 (Pa·s) |
|---|---|---|---|
| EBM1(Ex.1) | 68/32 | 7.3 | 14,000 |
| EBM2(Ex.2) | 65/35 | 8.0 | 20,000 |
| EBD1(Ex.3) | 64/32 | 25 | 50,000 |
| EBD2(Ex.4) | 66/32 | 35 | 70,000 |
| EBD3(Ex.5) | 64/32 | 7.6 | 10,000 |
| EBM3(C.Ex.1) | 68/32 | 1.2 | 1,300 |
| EBM4(C.Ex.2) | 68/32 | 2.6 | 3,200 |
| E: structural unit derived from ethylene B: structural unit derived from 1-butene D: structural unit derived from ethylidene norbornene η1: complex shear viscosity, which was measured at a temperature of 230° C and an angular velocity of 0.1 (rad/sec) of a cone plate having a diameter of 20 mm and a cone angle of 5° η2: complex shear viscosity, which was measured at a temperature of 230° C and an angular velocity of 100 (rad/sec) of a cone plate having a diameter of 20 mm and a cone angle of 5° | | | |

### preparation and evaluation of polypropylene resin composition

Polypropylene resins, ethylene-1-butene random copolymers, hydrogenated diene polymers and a filler used in the following Examples 6 to 15 and Comparative Examples 3 to 5 are as follows.

### (a) polypropylene resins

- PP1:: Japan Polychem Co., Ltd., trade name: BC03C, MFR = 30 (g/10 min)
- PP2:: Japan Polychem Co., Ltd., trade name: BC06C, MFR = 60 (g/10 min)

### (b) ethylene-1-butene random copolymers

EBM1 to EBM4 and EBD1 to EBD3 synthesized above

### (c) filler

talc: Fuji Talc Co., Ltd., trade name: LMS200

### (d) hydrogenated diene polymers

Hydrogenated diene polymers having structures shown in Table 2 and Table-3 were synthesized and used. Data in the tables were values measured as follows.

### content of bound aromatic vinyl compound

This is measured by infrared analysis based on the absorption of a phenyl group at 679 cm⁻¹.

### content of vinyl bonds of conjugated diene

This is calculated by a Hampton method using infrared analysis.

### degree of hydrogenation

This is calculated from a ¹H-NMR spectrum at 100 MHz using ethylene tetrachloride as a solvent.

### weight average molecular weight of hydrogenated diene polymer

This is obtained in terms of polystyrene by gel permeation chromatography (GPC) at 135° C using trichlorobenzene as a solvent.

### polymerization of C-1:

5 Kilograms of degassed and dehydrated cyclohexane and 40 g of styrene were charged into a 10-liter autoclave, 100 g of tetrahydrofuran and 0.6 g of n-butyllithium were added, and adiabatic polymerization was carried out at 50° C for 30 minutes. The temperature of the reaction solution was reduced to 10° C, 900 g of 1,3-butadiene and 40 g of styrene were added to carry out adiabatic polymerization. After the residual monomer was measured by gas chromatography and the conversion became almost 100 %, 20 g of styrene was further added to carry out polymerization.

When the amount of living Li was measured after the reaction was completed, it was 4.8 mmol. 0.26 Grams of 4-hydroxy-4-methyl-2-pentanone was added to this system and stirred for 10 minutes. It was confirmed from a change in the color of the polymer solution that there was no polymer terminal lithium living as living anions.

Thereafter, a reaction product obtained by reacting 0.82 g of 4-hydroxy-4-methyl-2-pentanone dissolved in 20 ml of cyclohexane with 0.96 g of n-butyllithium under a nitrogen atmosphere for 10 minutes and further a component obtained by mixing 0.47 g of bis(cyclopentadienyl)titanium dichloride with 1.36 g of diethylaluminum chloride dissolved in 10 ml of toluene under a nitrogen atmosphere were charged into the autoclave and stirred. Hydrogen gas was supplied at a pressure of 0.8 MPa to carry out a hydrogenation reaction at 90° C for 1.5 hours.

The obtained hydrogenated polymer had a hydrogenation degree of 99 %, a weight average molecular weight of 290,000 and a bound styrene content of 10.0 %.

The content of 1,2-vinyl bonds of the butadiene block of the polymer before hydrogenation was 70 %. The content of 1,2-vinyl bonds measured at the start of 1,3-butadiene block polymerization was 80 %, the content of 1,2-vinyl bonds of a 1,3-butadiene block at the end of polymerization calculated from the content of 1,2-vinyl bonds measured after the end of polymerization and the content of 1,2-vinyl bonds at the start of polymerization was 60 %, and the difference of the content of 1,2-vinyl bonds between both molecular terminals calculated therefrom was 20 %.

**Table 2**

| hydrogenated diene polymer No. | C-1 |
|---|---|
| structure of polymer before hydrogenation | |
| type of conjugated diene compound | BD |
| type of aromatic vinyl compound | St |
| content of random copolymer block (wt%) | 94 |
| proportion of 1,2- and 3,4-bonds to the total of all conjugated dienes of random copolymer block (%) | 70 |
| conjugated diene compound/aromatic vinyl compound | 90/10 |
| difference in content of 1,2-bonds between both molecular terminals random blocks (%) | 20 |

| physical properties of copolymer | |
|---|---|
| degree of hydrogenation (%) | 99 |
| number average molecular weight (×10⁴) | 29 |
| BD: butadiene St: styrene | |

### polymerization of C-2:

5 Kilograms of degassed and dehydrated cyclohexane and 300 g of 1,3-butadiene were charged into a 10-liter autoclave, 0.25 g of tetrahydrofuran and 0.90 g of n-butyllithium were added thereto, and isothermic polymerization was carried out at a fixed temperature of 80° C. After the residual monomer was measured by gas chromatography and the conversion became almost 100 %, the reaction solution was cooled to 25° C, 55 g of tetrahydrofuran and 700 g of 1,3-butadiene were added to carry out adiabatic polymerization.

After the completion of polymerization, 0.69 g of dichloromethylsilane was added to carry out a reaction for about 20 minutes. When the amount of living Li was measured after the completion of the reaction, it was 1.7 mmol. 0.09 Grams of 4-hydroxy-4-methyl-2-pentanone was added to this system and stirred for 10 minutes. It was confirmed from a change in the color of the polymer solution that there was no polymer terminal lithium living as living anions.

Thereafter, a reaction product obtained by reacting 1.11 g of 4-hydroxy-4-methyl-2-pentanone dissolved in 20 ml of cyclohexane with 1.30 g of n-butyllithium under a nitrogen atmosphere for 10 minutes and further a component obtained by mixing 0.52 g of bis(cyclopentadienyl)titanium dichloride with 1.51 g of diethylaluminum chloride dissolved in 10 ml of toluene under a nitrogen atmosphere were charged into the autoclave and stirred. Hydrogen gas was supplied at a pressure of 0.8 MPa to carry out a hydrogenation reaction at 90° C for 1.5 hours.

The obtained hydrogenated polymer had a hydrogenation degree of 96 %, a weight average molecular weight of an uncoupled component (a) of 162,000, a weight average molecular weight of a coupled component (b) of 324,000, a total weight average molecular weight of the components (a) and (b) of 300,000, and a component (a)/component (b) weight ratio of 17/83.

The content of 1, 2-vinyl bonds of a 1,3-butadiene block measured at the end of the first-stage 1,3-butadiene block polymerization was 13 %, and the content of 1,2-vinyl bonds of the 1,3-butadiene block of the second stage calculated from the content of 1,2-vinyl bonds measured at the end of the second-stage 1,3-butadiene polymerization and the content of vinyl bonds of the first stage was 72 %.

**Table 3**

| name of polymer | C-2 |
|---|---|
| sequence of block structures | C-B-C |
| micro-structure (%) | |
| content of block (B) | 70 |
| type of monomer forming block (B) | BD |
| content of vinyl bonds in block (B) | 72 |
| content of block (C) | 30 |
| type of monomer forming block (C) | BD |
| content of vinyl bonds in block (C) | 13 |
| weight average molecular weight (×10⁴) | 30 |
| degree of hydrogenation (%) | 95 |
| BD: butadiene | |

The measurement and evaluation of the physical properties of a composition are as follows.

### (1) preparation of test piece

A test piece was prepared from a polypropylene resin composition by an injection molding machine at an injection temperature of 220° C and a metal mold temperature of 40° C to evaluate physical properties thereof. The planished metal mold was used.

### (2) impact resistance

A notched test piece was used for the measurement of impact resistance at 23° C in accordance with JIS K7110.

### (3) flow mark

A flow mark on a 120 mm x 115 mm x 2 mm molded product was checked visually and evaluated based on the following criteria.
○: No flow mark is seen, or even if there is a flow mark, it does not stand out.
Δ: A flow mark is easily seen.
×: A flow mark stands out.

### (4) gloss

60° Specular gloss was measured in accordance with JIS K 7105. As gloss becomes lower, the flow mark stands out less and the appearance becomes better.

### (5) hardness

It was measured at 23° C with an R scale in accordance with JIS K7202.

### (6) brittle temperature

It was measured in accordance with JIS K7216.

### Examples 6 to 15 and Comparative Examples 3 to 5

Components shown in Tables 4 and 5 were mixed together with a Henschel mixer and melt kneaded with a twin-screw extruder (PCM-45 of Ikegai Corporation) at 220° C to obtain a polypropylene resin composition whose impact resistance, flow mark, gloss, hardness and brittle temperature were measured in accordance with the above methods. The results are shown in Tables 4 and 5.

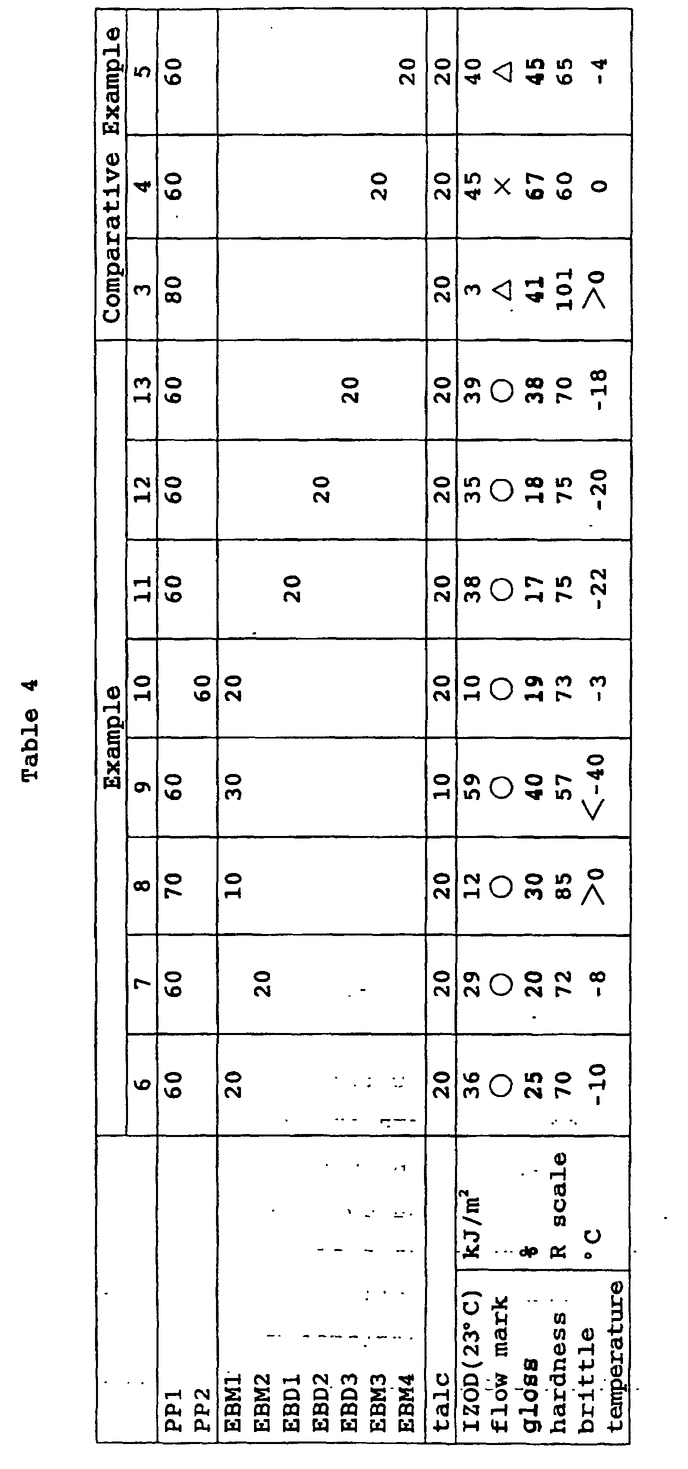

**Table 5**

| | | Example | |
|---|---|---|---|
| | | 14 | 15 |
| PP2 | | 60 | 60 |
| EBD1 | | 17 | 17 |
| C1 C2 | | 3 | - |
| | | - | 3 |
| talc (wt%) | | 20 | 20 |
| IZOD(23°C) | kJ/m² | 42 | 38 |
| flow mark | | ○ | ○ |
| gloss | % | 20 | 19 |
| hardness | R scale | 71 | 71 |
| brittle temperature | °C | -22 | -22 |

The following are found from the results shown in Tables 4 and 5.

The compositions of Examples 6 to 13 have high Izod impact strength at 23° C and a good appearance with low gloss. Further, the compositions comprising a non-conjugated diene of Examples 11 to 13 have low brittle temperatures, low gloss and substantially no flow mark.

The compositions comprising the second ethylene-1-butene random copolymer containing a non-conjugated diene and a hydrogenated diene polymer as a compatibilizer of Examples 14 and 15 have high Izod impact strength, low brittle temperature, low gloss and substantially no flow mark in spite of the fact that PP2 having high flowability is used.

In contrast to this, the composition of Comparative Example 3 has low Izod impact strength since it does not comprise an ethylene-1-butene random copolymer. Although the composition of Comparative Example 4 has satisfactory Izod impact strength, it has a bad appearance with high surface gloss and a distinct flow mark because the ethylene-1-butene random copolymer (EBM3) used does not satisfy the conditions (iii) of complex shear viscosity. The composition of Comparative Example 5 has a flow mark and is inferior in stiffness or the like because the ethylene-1-butene random copolymer (EBM4) used does not satisfy the conditions of η1/η2.

An injection molded product having excellent stiffness and impact resistance, low surface gloss and substantially no flow mark is obtained from the polypropylene resin composition containing an ethylene-1-butene copolymer as an elastomer component of the present invention.

Further, an injection molded product having the above characteristic properties which are balanced better than those of the above injection molded product is obtained from a polypropylene resin composition which further contains a specific hydrogenated diene polymer.

The polypropylene resin composition of the present invention is very useful in various fields such as interiors and exteriors of automobiles, stationery, construction materials, sanitary goods, AV and home electric appliances, films and sheets, and sundry goods.

An ethylene-1-butene random copolymer consisting essentially of a structural unit derived from ethylene and a structural unit derived from 1-butene, in which
(i) the (ethylene/1-butene) weight ratio of the structural unit derived from ethylene to the structural unit derived from 1-butene is in the range of 80/20 to 60/40; and
(ii) the complex shear viscosity η1 measured at a temperature of 230° C and a cone plate angular velocity of 0.1 (rad/sec) is 2,000 (Pa·s) or more and the value (η1/η2) obtained by dividing the above complex shear viscosity η1 by a complex shear viscosity η2 measured at the same temperature and a cone plate angular velocity of 100 (rad/sec) is 4 or more.

There is also provided a polypropylene resin composition containing the novel ethylene-1-butene random copolymer and a polypropylene resin and optionally a hydrogenated diene polymer. The resin composition has excellent stiffness, heat resistance and impact resistance and can give injection molded products having a good appearance with low surface gloss and substantially no flow mark.

## Claims

1. A polypropylene resin composition comprising
(A) a polypropylene resin,
(B) an ethylene-1-butene random copolymer consisting essentially of a structural unit derived from ethylene and a structural unit derived from 1-butene, wherein
(i) the (ethylene/1-butene) weight ratio of the structural unit derived from ethylene to the structural unit derived from 1-butene is in the range of 80/20 to 60/40; and
(ii) the complex shear viscosity η1 measured at a temperature of 230°C and a cone plate angular velocity of 0.1 (rad/sec) is 2,000 (Pa • s) or more and the value (η1/η2) obtained by dividing the complex shear viscosity η1 by a complex shear viscosity η2 measured at the same temperature and a cone plate angular velocity of 100 (rad/sec) is 4 or more, and
(C) a hydrogenated diene polymer obtained by hydrogenating at least 80% of the double bonds.of the conjugated diene block of a polymer mainly comprising a conjugated diene compound, and selected from the group consisting of (1) homopolymers of a conjugated diene; (2) random copolymers of a conjugated diene and an aromatic vinyl compound; (3) block copolymers comprising the polymer block of an aromatic vinyl compound and the polymer block of a conjugated diene compound; (4) block copolymers comprising the polymer block of an aromatic vinyl compound and the random copolymer block of a conjugated diene/aromatic vinyl compound; (5) block copolymers comprising the polymer block of a conjugated diene compound and the copolymer block of a conjugated diene/aromatic vinyl compound; (6) block copolymers comprising the polymer block of a conjugated diene compound and a tapered block composed of an aromatic vinyl compound and a conjugated diene with a gradual increase in the amount of the aromatic vinyl compound; (7) block copolymers comprising the random copolymer block of a conjugated diene/aromatic vinyl compound and a tapered block composed of an aromatic vinyl compound and a conjugated diene with a gradual increase in the amount of the aromatic vinyl compound; and (8) block copolymers comprising a polybutadiene block containing 30% or less of 1,2-vinyl bonds and the polymer block of a conjugated diene compound containing more than 30% of 1,2-and 3,4-vinyl bonds, wherein the weight ratio of the component (A) to the total of the components (B) and (C) is 95/5 to 60/40 and the weight ratio of the component (B) to the component (C) is 60/40 to 95/5.

2. The polypropylene resin composition of claim 1,
wherein the ethylene-1-butene random copolymer has the (ethylene/1-butene) weight ratio of the structural unit derived from ethylene to the structural unit derived from 1-butene in the range of 75/25 to 62/38.

3. The polypropylene resin composition of claim 1,
wherein the ethylene-1-butene random copolymer has the value η1/η2 of 6 or more.

4. The polypropylene resin composition of claim 1,
wherein the ethylene-1-butene random copolymer has a melting point measured by DSC of 60°C or less.

5. The polypropylene resin composition of claim 1,
wherein the ethylene-1-butene random copolymer has a weight average molecular weight in terms of polystyrene of 250,000 to 800,000.

6. The polypropylene resin composition of claim 1,
wherein the hydrogenated diene copolymer is at least one member selected from the above block copolymers (3), (4) and (8).

7. A polypropylene resin composition comprising
(A) a polypropylene resin,
(B) an ethylene-1-butene random copolymer consisting essentially of a structural unit derived from ethylene, a structural unit derived from 1-butene and a small amount of a structural unit derived from a non-conjugated diene,
wherein
(I) the (ethylene/1-butene) weight ratio of the structural unit derived from ethylene to the structural unit derived from 1-butene is in the range of 80/20 to 60/40, and the amount of the structural unit derived from the non-conjugated diene is in the range of 0.01 to 4 mol% based on the total of all the structural units; and
(II) the complex shear viscosity η1 measured at a temperature of 230°C and a cone plate angular velocity of 0.1 (rad/sec) is 4,000 (Pa • s) or more and the value (η1/η2) obtained by dividing the above complex shear viscosity η1 by a complex shear viscosity η2 measured at the same temperature and a cone plate angular velocity of 100 (rad/sec) is 4 or more, and
(C) a hydrogenated diene polymer obtained by hydrogenating at least 80% of the double bonds of the conjugated diene block of a polymer mainly comprising a conjugated diene compound, and selected from the group consisting of (1) homopolymers of a conjugated diene; (2) random copolymers of a conjugated diene and an aromatic vinyl compound; (3) block copolymers comprising the polymer block of an aromatic vinyl compound and the polymer block of a conjugated diene compound; (4) block copolymers comprising the polymer block of an aromatic vinyl compound and the random copolymer block of a conjugated diene/aromatic vinyl compound; (5) block copolymers comprising the polymer block of a conjugated diene compound and the copolymer block of a conjugated diene/aromatic vinyl compound; (6) block copolymers comprising the polymer block of a conjugated diene compound and a tapered block composed of an aromatic vinyl compound and a conjugated diene with a gradual increase in the amount of the aromatic vinyl compound; (7) block copolymers comprising the random copolymer block of a conjugated diene/aromatic vinyl compound and a tapered block composed of an aromatic vinyl compound and a conjugated diene with a gradual increase in the amount of the aromatic vinyl compound; and (8) block copolymers comprising a polybutadiene block containing 30% or less of 1,2-vinyl bonds and the polymer block of a conjugated diene compound containing more than 30 % of 1,2-and 3,4-vinyl bonds, wherein the weight ratio of the component (A) to the total of the components (B) and (C) is 95/5 to 60/40 and the weight ratio of the component (B) to the component (C) is 60/40 to 95/5.

8. The propylene resin composition of claim 7, wherein the ethylene-1-butene random copolymer has the (ethylene/1-butene) weight ratio of the structural unit derived from ethylene to the structural unit derived from 1-butene of 75/25 to 62/38.

9. The propylene resin composition of claim 7, wherein the ethylene-1-butene random copolymer has the value η1/η2 of 6 or more.

10. The propylene resin composition of claim 7, wherein the ethylene-1-butene random copolymer has melting point measured by DSC of 60°C or less.

11. The propylene resin composition of claim 7, wherein the ethylene-1-butene random copolymer has a weight average molecular weight in terms of polystylene of 250,000 to 800,000.

12. The propylene resin composition of claim 7, wherein the non-conjugated diene with respect to the ethylene-1-butene random copolymer is at least one member selected from the group consisting of 5-ethylidene-2-norbornene, dicyclopentadiene, 1,4-pentadiene, 1,4-hexadiene, 1,5-hexadiene, 1,6-heptadiene, 4-methyl-1,4-hexadiene, 5-methyl-1,4-hexadiene, 1,7-octadiene, 1,8-nonadiene, 7-methyl-1,6-octadiene, 1,9-decadiene, 5-vinyl-2-norbornene and 2,5-norbornadiene.

## Patentansprüche

1. Polypropylenharz-Zusammensetzung mit
(A) einem Polypropylenharz,
(B) einem statistischen Ethylen/1-Buten-Copolymer, das hauptsächlich besteht aus einer Struktureinheit, die abgeleitet ist von Ethylen, und einer Struktureinheit, die abgeleitet ist von 1-Buten, wobei
(i) das (Ethylen/1-Buten)-Gewichtsverhältnis der von Ethylen abgeleiteten Struktureinheit zur von 1-Buten abgeleiteten Struktureinheit im Bereich von 80/20 bis 60/40 ist; und
(ii) die komplexe Scherviskosität η1, gemessen bei einer Temperatur von 230°C und einer Kegel-Platte-Winkelgeschwindigkeit von 0,1 (rad/sec), beträgt 2000 (Pa·s) oder mehr, und der Wert (η1/η2), der erhalten wird durch Dividieren der komplexen Scherviskosität η1 durch eine komplexe Scherviskosität η2, gemessen bei der gleichen Temperatur und einer Kegel-Platte-Winkelgeschwindigkeit von 100 (rad/sec), 4 oder mehr ist, und
(C) einem hydrierten Dien-Polymer, erhalten durch Hydrieren von mindestens 80% der Doppelbindungen des Blocks eines konjugierten Diens eines Polymers, der hauptsächlich umfasst eine konjugierte Dien-Verbindung, und gewählt ist aus der Gruppe bestehend aus (1) Homopolymeren eines konjugierten Diens; (2) statistischen Copolymeren eines konjugierten Diens und einer aromatischen Vinyl-Verbindung; (3) Blockcopolymeren mit dem Polymerblock einer aromatischen Vinylverbindung und dem Polymerblock einer konjugierten Dien-Verbindung; (4) Blockcopolymeren mit dem Polymerblock einer aromatischen Vinylverbindung und dem statistischen Copolymerblock von konjugiertem Dien/aromatischer Vinylverbindung; (5) Blockcopolymeren mit dem Polymerblock einer konjugierten Dien-Verbindung und dem Copolymerblock von konjugiertem Dien/aromatischer Vinylverbindung; (6) Blockcopolymeren mit dem Polymerblock einer konjugierten Dien-Verbindung und einem konischen Block, zusammengesetzt aus einer aromatischen Vinylverbindung und einem konjugierten Dien mit einer allmählichen Erhöhung der Menge der aromatischen Vinylverbindung; (7) Blockcopolymeren mit dem statistischen Copolymerblock von konjugiertem Dien/aromatischer Vinylverbindung und einem konischen Block, zusammengesetzt aus einer aromatischen Vinylverbindung und einem konjugierten Dien, mit einer allmählichen Erhöhung der Menge der aromatischen Vinylverbindung; und (8) Blockcopolymeren mit einem Polybutadien-Block, der enthält 30% oder weniger 1,2-Vinylbindungen, und dem Polymerblock einer konjugierten Dien-Verbindung, der enthält mehr als 30% 1,2- und 3,4-Vinylbindungen, wobei das Gewichtsverhältnis des Bestandteils (A) zur Summe der Bestandteile (B) und (C) 95/5 bis 60/40 ist, und das Gewichtsverhältnis des Bestandteils (B) zu Bestandteil (C) 60/40 bis 95/5 ist.

2. Polypropylenharz-Zusammensetzung nach Anspruch 1, wobei das statistische Ethylen/1-Buten-Copolymer ein (Ethylen/1-Buten)-Gewichtsverhältnis der von Ethylen abgeleiteten Struktureinheit zur von 1-Buten abgeleiteten Struktureinheit im Bereich von 75/25 bis 62/38 hat.

3. Polypropylenharz-Zusammensetzung nach Anspruch 1, wobei das statistische Ethylen/1-Buten-Copolymer einen Wert η1/η2 von 6 oder mehr hat.

4. Polypropylenharz-Zusammensetzung nach Anspruch 1, wobei das statistische Ethylen/1-Buten Copolymer einen mittels DSC gemessenen Schmelzpunkt von 60°C oder weniger hat.

5. Polypropylenharz-Zusammensetzung nach Anspruch 1, wobei das statistische Ethylen/1-Buten-Copolymer ein massegemitteltes Molekulargewicht bezüglich Polystyrol von 250 000 bis 800 000 hat.

6. Polypropylenharz-Zusammensetzung nach Anspruch 1, wobei das hydrierte Dien-Copolymer mindestens ein Element, gewählt von den obenstehenden Blockcopolymeren (3), (4) und (8) ist.

7. Polypropylenharz-Zusammensetzung mit
(A) einem Polypropylenharz,
(B) einem statistischen Ethylen/1-Buten-Copolymer, das hauptsächlich besteht aus einer von Ethylen abgeleiteten Struktureinheit, einer von 1-Buten abgeleiteten Stuktureinheit und einer kleinen Menge einer Stuktureinheit, die von einem nicht-konjugierten Dien abgeleitet ist, wobei
(I) das (Ethylen/1-Buten)-Gewichtsverhältnis der von Ethylen abgeleiteten Struktureinheit zur von 1-Buten abgeleiteten Struktureinheit im Bereich von 80/20 bis 60/40 ist, und die Menge der Struktureinheit, die von dem nicht-konjugierten Dien abgeleitet ist, im Bereich von 0,01 bis 4 Mol-%, basierend auf der Summe aller Struktureinheiten, ist; und
(II) die komplexe Scherviskosität η1, gemessen bei einer Temperatur von 230°C und einer Kegel-Platte-Winkelgeschwindigkeit von 0,1 (rad/sec) beträgt 4000 (Pa·s) oder mehr, und der Wert (η1/η2), erhalten durch Dividieren der obigen komplexen Scherviskosität η1 durch eine komplexe Scherviskosität η2, gemessen bei der gleichen Temperatur und einer Kegel-Platte-Winkelgeschwindigkeit von 100 (rad/sec), 4 oder mehr ist, und
(C) einem hydrierten Dien-Polymer, erhalten durch Hydrieren von mindestens 80% der Doppelbindungen des Blocks eines konjugierten Diens eines Polymers, der hauptsächlich umfasst eine konjugierte Dien-Verbindung, und gewählt ist aus der Gruppe bestehend aus (1) Homopolymeren eines konjugierten Diens; (2) statistischen Copolymeren eines konjugieren Diens und einer aromatischen Vinylverbindung; (3) Blockcopolymeren, welche umfassen den Polymerblock einer aromatischen Vinylverbindung und den Polymerblock einer konjugierten Dien-Verbindung; (4) Blockcopolymeren, welche umfassen den Polymerblock einer aromatischen Vinylverbindung und den statistischen Copolymerblock von konjugiertem Dien/aromatischer Vinylverbindung; (5) Blockcopolymeren, welche umfassen den Polymerblock einer konjugierten Dien-Verbindung und den Copolymerblock von konjugiertem Dien/aromatischer Vinylverbindung; (6) Blockcopolymeren, welche umfassen den Polymerblock einer konjugierten Dien-Verbindung und einen konischen Block, zusammengesetzt aus einer aromatischen Vinylverbindung und einem konjugierten Dien, mit einer allmählichen Erhöhung der Menge der aromatischen Vinylverbindung; (7) Blockcopolymeren, welche umfassen den statistischen Copolymerblock von konjugiertem Dien/aromatischer Vinylverbindung und einen konischen Block, zusammengesetzt aus einer aromatischen Vinylverbindung und einem konjugierten Dien, mit einer allmählichen Erhöhung der Menge der aromatischen Vinylverbindung; und (8) Blockcopolymeren, welche umfassen einen Polybutadien-Block, der enthält 30% oder weniger 1,2-Vinylbindungen, und den Polymerblock einer konjugierten Dien-Verbindung, der enthält mehr als 30% von 1,2- und 3,4-Vinylbindungen, wobei das Gewichtsverhältnis des Bestandteils (A) zur Summe der Bestandteile (B) und (C) ist 95/5 bis 60/40, und das Gewichtsverhältnis des Bestandteils (B) zum Bestandteil (C) ist 60/40 bis 95/5.

8. Propylenharz-Zusammensetzung nach Anspruch 7, wobei das statistische Ethylen/1-Buten Copolymer ein (Ethylen/1-Buten)-Gewichtsverhältnis der von Ethylen abgeleiteten Struktureinheit zur von 1-Buten abgeleiteten Struktureinheit von 75/25 bis 62/38 hat.

9. Propylenharz-Zusammensetzung nach Anspruch 7, wobei das statistische Ethylen/1-Buten-Copolymer einen Wert η1/η2 von 6 oder mehr hat.

10. Propylenharz-Zusammensetzung nach Anspruch 7, wobei das statistische Ethylen/1-Buten-Copolymer einen mittels DSC gemessenen Schmelzpunkt von 60°C oder weniger hat.

11. Propylenharz-Zusammensetzung nach Anspruch 7, wobei das statistische Ethylen/1-Buten-Copolymer ein massegemitteltes Molekulargewicht in Bezug auf Polystyrol von 250 000 bis 800 000 hat.

12. Propylenharz-Zusammensetzung nach Anspruch 7, wobei das nicht-konjugierte Dien bezüglich dem statistischen Ethylen/1-Buten-Copolymer mindestens ein Element, gewählt aus der Gruppe bestehend aus 5-Ethyliden-2-norbornen, Dicyclopentadien, 1,4-Pentadien, 1,4-Hexadien, 1,5-Hexadien, 1,6-Heptadien, 4-Methyl-1,4-hexadien, 5-Methyl-1,4-hexadien, 1,7-Octadien, 1,8-Nonadien, 7-Methyl-1,6-octadien, 1,9-Decadien, 5-Vinyl-2-norbornen und 2,5-Norbornadien, ist.

## Revendications

1. Composition de résine de polypropylène comprenant
(A) une résine de polypropylène,
(B) un copolymère statistique éthylène/1-butène consistant essentiellement en une unité structurale dérivée de l'éthylène et en une unité structurale dérivée du 1-butène, dans lequel
(i) le rapport en poids (éthylène/1-butène) de l'unité structurale dérivée de l'éthylène à l'unité structurale dérivée du 1-butène est dans la plage de 80/20 à 60/40 ; et
(ii) la viscosité de cisaillement complexe η1, mesurée à une température de 230°C et à une vitesse angulaire plan-cône de 0,1 (rad/s), est de 2000 (Pa • s) ou plus et la valeur (η1/η2), obtenue en divisant la viscosité de cisaillement complexe η1 par une viscosité de cisaillement complexe η2 mesurée à la même température et à une vitesse angulaire plan-cône de 100 (rad/s), est de 4 ou plus, et
(C) un polymère de diène hydrogéné, obtenu en hydrogénant au moins 80 % des doubles liaisons de la séquence diène conjugué d'un polymère comprenant principalement un composé de diène conjugué, et choisi dans le groupe constitué par (1) les homopolymères d'un diène conjugué; (2) les copolymères statistiques d'un diène conjugué et d'un composé vinylaromatique ; (3) les copolymères séquencés comprenant la séquence polymère d'un composé vinylaromatique et la séquence polymère d'un composé diène conjugué ; (4) les copolymères séquencés comprenant la séquence polymère d'un composé vinylaromatique et la séquence de copolymère statistique diène conjugué/composé vinylaromatique ; (5) les copolymères séquencés comprenant la séquence polymère d'un composé diène conjugué et la séquence copolymère diène conjugué/composé vinylaromatique ; (6) les copolymères séquencés comprenant la séquence polymère d'un composé diène conjugué et une séquence composée d'un composé vinylaromatique et d'un diène conjugué avec une augmentation graduelle de la quantité de composé vinylaromatique ; (7) les copolymères séquencés comprenant la séquence de copolymère statistique diène conjugué/composé vinylaromatique et une séquence progressive composée d'un composé vinylaromatique et d'un diène conjugué avec une augmentation graduelle de la quantité de composé vinylaromatique ; et (8) les copolymères séquencés comprenant une séquence de polybutadiène contenant 30 % ou moins de liaisons 1,2-vinyle et la séquence de polymère d'un composé diène conjugué contenant plus de 30 % de liaisons 1,2- et 3,4-vinyle, le rapport en poids du composant (A) au total des composants (B) et (C) étant de 95/5 à 60/40 et le rapport en poids du composant (B) au composant (C) étant de 60/40 à 95/5.

2. Composition de résine de polypropylène selon la revendication 1, dans laquelle le copolymère statistique éthylène/ 1-butène a le rapport en poids (éthylène/1-butène) de l'unité structurale dérivée de l'éthylène à l'unité structurale dérivée du 1-butène dans la plage de 75/25 à 62/38.

3. Composition de résine de polypropylène selon la revendication 1, dans laquelle le copolymère statistique éthylène/1-butène a la valeur η1 /η2 de 6 ou plus.

4. Composition de résine de polypropylène selon la revendication 1, dans laquelle le copolymère statistique éthylène/1-butène a un point de fusion, mesuré par ACD (analyse calorimétrique différentielle°, de 60°C ou moins.

5. Composition de résine DE polypropylène selon la revendication 1, dans laquelle le copolymère statistique éthylène/1-butène a une masse moléculaire moyenne en poids, en termes de polystyrène, de 250000 à 800000.

6. Composition de résine de polypropylène selon la revendication 1, dans laquelle le copolymère de diène hydrogéné est au moins un élément choisi parmi les copolymères séquencés (3), (4) et (8) ci-dessus.

7. Composition de résine de polypropylène comprenant
(A) une résine de polypropylène,
(B) un copolymère statistique éthylène/1-butène consistant essentiellement en une unité structurale dérivée de l'éthylène, en une unité structurale dérivée du 1-butène et en une petite quantité d'une unité structurale dérivée d'un diène non conjugué,
dans laquelle
(I) le rapport en poids (éthylène/1-butène) de l'unité structurale dérivée de l'éthylène à l'unité structurale dérivée du 1-butène est dans la plage de 80/20 à 60/40, et la quantité de l'unité structurale dérivée du diène non conjugué est dans la plage de 0,01 à 4 % en moles, rapportée au total de toutes les unités structurales ; et
(II) la viscosité de cisaillement complexe η1, mesurée à une température de 230°C et à une vitesse angulaire plan-cône de 0,1 (rad/s), est de 4000 (Pa • s) ou plus et la valeur (η1/η2), obtenue en divisant la viscosité de cisaillement complexe η1 ci-dessus par une viscosité de cisaillement complexe η2 mesurée à la même température et à une vitesse angulaire plan-cône de 100 (rad/s), est de 4 ou plus, et
(C) un polymère de diène hydrogéné, obtenu en hydrogénant au moins 80 % des doubles liaisons de la séquence diène conjugué d'un polymère comprenant principalement un composé diène conjugué, et choisi dans le groupe constitué par (1) les homopolymères d'un diène conjugué; (2) les copolymères statistiques d'un diène conjugué et d'un composé vinylaromatique ; (3) les copolymères séquencés comprenant la séquence polymère d'un composé vinylaromatique et la séquence polymère d'un composé diène conjugué ; (4) les copolymères séquencés comprenant la séquence polymère d'un composé vinylaromatique et la séquence de copolymère statistique diène conjugué/composé vinylaromatique ; (5) les copolymères séquencés comprenant la séquence polymère d'un composé diène conjugué et la séquence de copolymère diène conjugué/composé vinylaromatique ; (6) les copolymères séquencés comprenant la séquence polymère d'un composé diène conjugué et une séquence progressive composée d'un composé vinylaromatique et d'un diène conjugué avec une augmentation graduelle de la quantité de composé vinylaromatique ; (7) les copolymères séquencés comprenant la séquence de copolymère statistique diène conjugué/composé vinylaromatique et une séquence progressive composée d'un composé vinylaromatique et d'un diène conjugué avec une augmentation graduelle du quantité du composé vinylaromatique ; et (8) les copolymères séquencés comprenant une séquence de polybutadiène contenant 30 % ou moins de liaisons 1,2-vinyle et la séquence polymère d'un composé diène conjugué contenant plus de 30 % de liaisons 1,2- et 3,4-vinyle, le rapport en poids du composant (A) au total des composants (B) et (C) étant de 95/5 à 60/40 et le rapport en poids du composant (B) au composant (C) étant de 60/40 à 95/5.

8. Composition de résine de propylène selon la revendication 7, dans laquelle le copolymère statistique éthylène/ 1-butène a le rapport en poids (éthylène/1-butène) de l'unité structurale dérivée de l'éthylène à l'unité structurale dérivée du 1-butène de 75/25 à 62/38.

9. Composition de résine de propylène selon la revendication 7, dans laquelle le copolymère statistique éthylène/1-butène a la valeur η1/η2 de 6 ou plus.

10. Composition de résine de propylène selon la revendication 7, dans laquelle le copolymère statistique éthylène/1-butène a un point de fusion, mesuré par ACD, de 60°C ou moins.

11. Composition de résine de propylène selon la revendication 7, dans laquelle le copolymère statistique éthylène/1-butène a une masse moléculaire moyenne en poids, en termes de polystyrène, de 250000 à 800000.

12. Composition de résine de propylène selon la revendication 7, dans laquelle le diène non conjugué, en ce qui concerne le copolymère statistique éthylène/1-butène, est au moins un composé choisi dans le groupe constitué par le 5-éthylidène-2-norbornène, le dicyclopentadiène, le 1,4-pentadiène, le 1,4-hexadiène, le 1,5-hexadiène, le 1,6-heptadiène, le 4-méthyl-1,4-hexadiène, le 5-méthyl-1,4-hexadiène, le 1,7-octadiène, le 1,8-nonadiène, le 7-méthyl-1,6-octadiène, le 1,9-décadiène, le 5-vinyl-2-norbornène et le 2,5-norbornadiène.
